# EUROPÄISCHE PATENTSCHRIFT

(11) **EP 3 900 869 B1**
(45) Veröffentlichungstag und Bekanntmachung des Hinweises auf die Patenterteilung: **18.12.2024**
(21) Anmeldenummer: 21165331.6
(22) Anmeldetag: 26.03.2021
(51) Int. Cl.: B23K 26/03, B23K 26/342, B23K 31/12, B33Y 10/00, B33Y 30/00

(54) **VERFAHREN UND VORRICHTUNG ZUR OPTISCHEN QUALITÄTSKONTROLLE BEIM LASERAUFTRAGSSCHWEISSEN**
METHOD AND DEVICE FOR OPTICAL QUALITY CONTROL IN LASER DEPOSITION WELDING
PROCÉDÉ ET DISPOSITIF DE CONTRÔLE QUALITÉ OPTIQUE LORS DU SOUDAGE PAR DÉPÔT LASER

(30) Priorität: 07.04.2020 DE 102020109648
(43) Veröffentlichungstag der Anmeldung: 27.10.2021
(73) Patentinhaber: Zierhut, Jochen, 81739 München (DE)
(72) Erfinder: Zierhut, Jochen, 81739 München (DE)
(74) Vertreter: Schlimme, Wolfram

(56) Entgegenhaltungen:
- EP-B1- 1 036 856
- DE-A1- 102011 103 282
- US-B1- 6 995 334

## Beschreibung

### TECHNISCHES GEBIET

Die vorliegende Erfindung betrifft ein Verfahren zur optischen Qualitätskontrolle beim Laserauftragsschweißen. Sie betrifft weiterhin eine Vorrichtung zur Durchführung eines solchen Verfahrens.

### HINTERGRUND DER ERFINDUNG

Beim Laserauftragsschweißen, auch als "Laser-Cladding" bezeichnet, wird ein hochenergetischer Laserstrahl durch eine Fokussieroptik auf die Oberfläche eines zu beschichtenden Werkstücks gerichtet. Durch die so in das Werkstück eingebrachte Energie kommt es lokal zum Aufschmelzen des Materials wodurch in einem Bearbeitungsfleck auf der Oberfläche ein Schmelzbad entsteht. Ein pulverförmiges Beschichtungsmaterial, beispielsweise ein Metallpulver, wird auf das Schmelzbad im Bearbeitungsfleck aufgebracht. Beispielsweise transportiert dabei ein Gasstrom das feine Metallpulver entlang eines die Fokussieroptik aufnehmenden Laserkopfes, wobei der das Metallpulver enthaltende Gasstrom durch kleine Gasaustrittsdüsen auf den Bearbeitungsfleck austritt und dann das Metallpulver im Schmelzbad abscheidet. Aufgrund der dort herrschenden hohen Temperaturen schmilzt das Metallpulver ebenfalls auf und verbindet sich mit dem Werkstück, wodurch die Beschichtung des Werkstücks mit einer Schicht des Beschichtungsmaterials entsteht. Außer Metallpulver können beispielsweise auch keramische Pulverwerkstoffe, speziell Hartstoffe, als Beschichtungsmaterial verwendet werden. Während dieses Prozesses bewegen sich der Laserkopf mit den Gasaustrittsdüsen und das Werkstück relativ zueinander, beispielsweise wird der Laserkopf über die zu beschichtende Oberfläche des Werkstücks geführt. Das so genannte High-Speed-Laser-Cladding funktioniert nach dem gleichen Prinzip, jedoch mit sehr viel höherer Leistung des Laserstrahls und bei hoher relativer Verfahrgeschwindigkeit zwischen Laserkopf und Werkstück.

### STAND DER TECHNIK

Aus der EP 1 036 856 B1 ist ein Verfahren zur Qualitätssicherung beim thermischen Spritzen bekannt, bei welchem ein auf eine zu beschichtende Werkstückoberfläche gerichteter Plasmastrahl, in welchen ein pulverförmiges Beschichtungsmaterial von der Seite eingeleitet wird, mittels einer Bilderfassungseinrichtung von der Seite betrachtet wird. In den so erfassten Bildern wird mittels rechnerischer Überarbeitung und/oder Verfremdung mindestens ein Bereich gleicher Intensität und/oder mindestens ein Bereich innerhalb eines bestimmten Intensitätsintervalls einem oder mehreren symmetrischen geometrischen Flächenkörpern zugeordnet, wobei der oder die symmetrischen geometrischen Flächenkörper anhand von für die jeweilige geometrische Form charakteristischen Merkmalen als Datensatz oder Datensätze erfasst werden und über diesen Datensatz oder über diese Datensätze zumindest ein die Qualität der Spritzschicht beeinflussendes Merkmal des thermischen Spritzprozesses erfasst, kontrolliert und/oder überwacht wird.

Bei diesem bekannten Verfahren wird die Qualitätskontrolle nicht am beschichteten Werkstück durchgeführt, sondern es wird der mit Beschichtungsmaterial angereicherte, die Beschichtung bewirkende Plasmastrahl einer Qualitätskontrolle unterworfen. Diese Qualitätskontrolle erfolgt somit mittelbar und nicht unmittelbar.

Die US 2017/0151628 A1 beschreibt eine Vorrichtung zur Temperaturerfassung bei der additiven Fertigung und zur Steuerung der additiven Fertigung sowie ein Verfahren zur Verwendung einer derartigen Vorrichtung. Ein spektrophotometrischer Sensor sensiert die von einem Laserstrahl bei der additiven Fertigung erzeugte Materialschmelze, wobei das von der Schmelze emittierte Licht vom Sensor erfasst wird und daraus mittels einer Spektralauswertung die Temperatur bestimmt wird. Dabei wird ein zweidimensionales Temperaturprofil der betrachteten Schmelze erstellt. Zur Bestimmung der Temperatur wird die Farbtemperatur des von der Schmelze ausgesandten Lichts herangezogen. Das auf diese Weise ermittelte zweidimensionale Temperaturprofil des beobachteten Schmelzflecks wird herangezogen, um Iso-Temperaturlinien zu bestimmen. Diese Iso-Temperaturlinien bilden die geometrische Gestalt des Schmelzflecks und dienen zusammen mit einem sich aus unterschiedlichen Iso-Temperaturlinien ergebenden Iso-Temperaturprofil die Steuerungsdaten für die an den Laser gelieferte Energie. Gemäß dieser Lehre wird somit mittels eines spektrophotometrischen Sensors das vom Schmelzfleck ausgesandte Licht empfangen und daraus wird ein zweidimensionales Temperaturprofil des Schmelzflecks gebildet. Aus diesem Temperaturprofil werden Iso-Temperaturlinien gebildet, die dann zur Steuerung des Lasers herangezogen werden.

US 6,995,334 B1, die die Grundlage für den Oberbegriff der unabhängigen Ansprüche bildet, zeigt und beschreibt sowohl ein Verfahren als auch eine Vorrichtung zur optischen Qualitätskontrolle für das Laserauftragsschweißen. Dort wird beim Laserauftragsschweißen ein auf einem Werkstück gebildetes Schmelzbad mit einer Bilderfassungseinrichtung derart beobachtet, dass vom Schmelzbad ausgehende Strahlung zunächst gefiltert und dann von der Bilderfassungseinrichtung erfasst wird. Zumindest eine Eigenschaft des Schmelzbads wird dann mit einer entsprechenden gespeicherten Eigenschaft eines Ziel-Schmelzbads verglichen und aufgrund der in diesem Vergleich festgestellten Abweichungen wird die Intensität des Lasers nachgeregelt. Die entsprechende Eigenschaft ist die Breite des Schmelzbads, wobei davon ausgegangen wird, dass das Schmelzbad im Wesentlichen kreisförmig ist.

Die DE 10 2011 103 282 A1 zeigt und beschreibt ein Verfahren zum Überwachen der Bearbeitung eines Werkstücks mit einem hochenergetischen Bearbeitungsstrahl sowie eine diesbezügliche Vorrichtung. Mittels einer Bilderfassungseinrichtung wird der Durchmesser der Auftreffstelle des hochenergetischen Strahls auf dem zu bearbeitenden Werkstück ermittelt und abgespeichert. In einem nächsten Schritt wird dann überprüft, ob die erfassten Bilddaten, also der erfasste Durchmesser der Auftreffstelle, mit einem gespeicherten Sollwert übereinstimmen. Wird eine Abweichung festgestellt, so werden daraufhin Prozessparameter verändert.

### DARSTELLUNG DER ERFINDUNG

Aufgabe der vorliegenden Erfindung ist es daher, ein verbessertes Verfahren und eine zugehörige Vorrichtung zur optischen Qualitätskontrolle eines thermischen Beschichtungsprozesses anzugeben, mit denen eine verbesserte Qualitätskontrolle beim Laserauftragsschweißen durchgeführt werden kann.

Der auf das Verfahren gerichtete Teil der Aufgabe wird gelöst durch ein Verfahren mit den Merkmalen des Anspruchs 1. Der auf die Vorrichtung gerichtete Teil der Aufgabe wird gelöst durch eine Vorrichtung mit den Merkmalen des Anspruchs 9.

Ein erfindungsgemäßes Verfahren zur optischen Qualitätskontrolle beim Laserauftragsschweißen, wobei im Prozess des Laserauftragsschweißens die Oberfläche eines zu beschichtenden Werkstücks mittels eines auf einen Bearbeitungsfleck auf der Oberfläche gerichteten und durch eine Fokussieroptik auf einen Auftreffpunkt auf die Oberfläche fokussierten hochenergetischen Laserstrahls angeschmolzen wird, wobei zwischen dem Laserstrahl und dem Werkstück eine Relativbewegung erfolgt, wobei durch den Laserstrahl im Bearbeitungsfleck ein Schmelzbad erzeugt wird, und wobei ein pulverförmiges Beschichtungsmaterial auf das Schmelzbad im Bearbeitungsfleck aufgebracht wird, umfasst die folgenden Schritte:
a) Erfassen der vom Schmelzbad als Licht emittierten elektromagnetischen Strahlung mittels einer Bilderfassungseinrichtung, wobei die Helligkeit des emittierten Lichts die Intensität der emittierten elektromagnetischen Strahlung repräsentiert;
b) Weiterleiten der erfassten Bildinformation des Schmelzbads an eine Bildauswerteeinheit und Kontrollieren und/oder Überwachen von zumindest einem die Qualität der Beschichtung beeinflussenden Parameter des Laserauftragsschweiß-Prozesses mittels einer Prozesssteuereinrichtung auf der Basis der erfassten Bildinformation;
c) rechnerisches Bestimmen der Ortsdaten von zumindest einem Bereich gleicher Intensität und/oder von zumindest einem Bereich innerhalb eines bestimmten Intensitätsintervalls in der erfassten Bildinformation zur Bildung einer Kontur des Bereichs;
d) Zuordnen von zumindest einem symmetrischen, elliptischen Flächenkörper zu dem zumindest einen Bereich gleicher Intensität durch Approximation einer Ellipse an die Kontur des Bereichs;
e) Ermitteln von für die geometrische Form des zumindest einen symmetrischen, elliptischen Flächenkörpers charakteristischen Merkmalen;
f) Speichern der charakteristischen Merkmale des zumindest einen symmetrischen, elliptischen Flächenkörpers als Datensatz in einer Datenspeichereinrichtung und
g) Erfassen, Kontrollieren und/oder Überwachen von zumindest einem die Qualität der Beschichtung beeinflussenden Parameter des Laserauftragsschweiß-Prozesses mittels einer Prozesssteuereinrichtung auf der Basis der Daten der charakteristischen Merkmale des zumindest einen symmetrischen, elliptischen Flächenkörpers.

### VORTEILE

Durch die unmittelbare Qualitätskontrolle des Schweißprozesses auf der Oberfläche des zu beschichtenden Werkstücks parallel zur durchgeführten Werkstückbearbeitung mithilfe der Bilderfassungseinrichtung lässt sich eine genauere und zuverlässigere Qualitätsbeurteilung durchführen als bei einer nur mittelbaren Kontrolle. Bei der Erfindung wird unmittelbar das von der Bilderfassungseinrichtung erfasste Bildsignal in Bezug auf die Intensität der empfangenen elektromagnetischen Strahlung ohne dass es des Umwegs über eine Temperaturbestimmung bedarf. Das erfindungsgemäße Verfahren ermöglicht es, den Schweißprozess, also das Schmelzen des pulverförmigen Beschichtungsmaterials im Schmelzbad, direkt während der Werkstückbearbeitung mittels der Bilderfassungseinrichtung zu untersuchen und wie angegeben zu analysieren, beispielsweise im Schritt g) durch einen Vergleich der ermittelten charakteristischen Merkmale mit entsprechenden Sollwertvorgaben für diese Merkmale, die in einer Speichereinrichtung gespeichert sein können. Vorzugsweise können einzelne Parameter des Prozesses des Laserauftragsschweißens in zumindest einem dem Schritt g) folgenden Schritt auch gesteuert und/oder geregelt werden.

Beim Verfahren der Erfindung liegt der Fokus somit nicht auf einer wissenschaftlich exakten Schmelzbadvermessung mit der Generierung physikalischer Werte wie zum Beispiel der Ermittlung der Temperatur oder der Geschwindigkeit, wie sie für Forschungs- und Entwicklungszwecke nützlich wären, sondern auf einer prinzipiellen Prozessanalyse mit dem vereinfachenden Ergebnis "in Ordnung" oder "nicht in Ordnung", das für den Einsatz in der Serienbeschichtung von Werkstücken mittels des Laserauftragsschweißens völlig ausreichend ist.

Dabei wird der Effekt genutzt, dass das Schmelzbad in Abhängigkeit von bestimmten Materialeigenschaften des schmelzenden Materials Wirkungen unterschiedlicher Intensität entfaltet. Eine solche Wirkung kann beispielsweise das Aussenden von elektromagnetischer Strahlung, wie sichtbares oder unsichtbares Licht, sein. In diesem letzteren Beispielfall leuchtet das Schmelzbad in Abhängigkeit von der Temperatur im Schmelzbad intensiver, also heller (bei höherer Temperatur) oder weniger intensiv, also weniger hell (bei niedriger Temperatur). Bereiche unterschiedlicher Helligkeit repräsentieren somit Bereiche unterschiedlicher Temperatur. Das von der Bilderfassungseinrichtung aufgenommene Bild weist somit zumindest einen Bereich gleicher Intensität (= gleicher Helligkeit) und/oder zumindest einen Bereich innerhalb eines bestimmten Intensitätsintervalls (= Helligkeitsintervall) auf, der der weiteren Auswertung zugrunde gelegt wird. Die Nutzung der die Aussendung von Licht umfassenden Wirkung kann dahingehend ausgestaltet werden, dass diese Nutzung auf einen oder mehrere Frequenzbereiche (= Farben) des vom Schmelzbad ausgesandten Lichts gerichtet wird.

Die rechnerische Bestimmung von Ortsdaten, beispielsweise den Koordinaten eines jeden Ortes, des zumindest einen Bereichs gleicher Intensität oder des Bereichs innerhalb eines Identitätsintervalls liefert eine nachstehend eine auch als "Isointensitätslinie" bezeichnete Kurve oder bandartige Fläche, der rechnerisch ein symmetrischer Flächenkörper zugeordnet wird. Im statischen Fall ist dieser Flächenkörper kreisförmig und im bewegten Fall (Relativbewegung zwischen Laserkopf und Werkstück) beispielsweise elliptisch.

Das eingesetzte rechnerische Verfahren ist eine schwellwertorientierte Kontursuche mit anschließender Approximation einer geometrischen Figur an diese Kontur. Die schwellwertorientierte Kontur ist dabei die Isointensitätslinie. Erfindungsgemäß ist die sich aus einer solchen Approximation ergebende geometrische Figur eine Ellipse, deren charakteristische Merkmale die Lage (Ortskoordinaten - x, y) des Mittelpunkts, der jeweilige Halbmesser der beiden Hauptachsen und die Ausrichtung der Hauptachsen um eine durch den Mittelpunkt verlaufende Hochachse sind. Diese charakteristischen Merkmale, also im Beispiel die genannten fünf Eigenschaftswerte der Ellipse, stellen ein vereinfachendes Ergebnis der Bildanalyse dar, mit dem anschließend rechnerisch der Vergleich mit einem Standard vorgenommen werden kann.

Diese Ermittlung eines vereinfachenden Ergebnisses mit dem Verfahren der Erfindung anhand der charakteristischen Merkmale des zumindest einen symmetrischen Flächenkörpers vereinfacht und beschleunigt die Analyse des von der Bilderfassungseinrichtung erfassten Bildes beziehungsweise der erfassten Bilder, da nur noch die charakteristischen Merkmale (zum Beispiel die Mittelpunktlage und der Durchmesser eines Kreises oder die Mittelpunktlage, die Halbmesser und die Ausrichtung einer Ellipse) des symmetrischen Flächenkörpers mit einem vorgegebenen Standard verglichen werden müssen. Das erfindungsgemäße Verfahren eignet sich daher besonders für das High-Speed-Laser-Cladding mit hoher Relativgeschwindigkeit zwischen Laserkopf und Werkstück.

Weitere bevorzugte und vorteilhafte Ausgestaltungsmerkmale des erfindungsgemäßen Verfahrens sind Gegenstand der Unteransprüche 2 bis 8.

Bevorzugterweise werden in dem Intervall mehrere Einzelbilder mit jeweils kurzer Verschlusszeit aufgenommen. Da das Schmelzbad bei der Durchführung des Prozesses des Laserauftragsschweißens wabert und somit die Intensität der erfassten Bildinformation (zum Beispiel die Helligkeit im gewählten Spektralbereich) sehr stark schwankt, können die einzelnen aufgenommenen Bilder hinsichtlich der in ihnen enthaltenen Bildinformation sehr unterschiedlich sein. Zudem kann es vorkommen, dass die auf beziehungsweise in das Schmelzbad geblasenen Partikel des pulverförmigen Beschichtungsmaterials zum Teil an der Oberfläche des Schmelzbades abprallen oder durch das Bild fliegen; ein solches Einzelbild ist für die erfindungsgemäße Art der Qualitätskontrolle ebenfalls weniger geeignet. Daher werden vorzugsweise mehrere Bilder während eines Intervalls aufgenommen (beispielsweise 1 bis 100 Bilder) und die darin enthaltene Bildinformation wird gemittelt. Man erhält dadurch ein nahezu stabiles resultierendes Bild mit repräsentativen Intensitätswerten und ohne störende Einzelpartikel, die die Bildhelligkeit lokal verfälschen. Ein solches über eine Mehrzahl von Einzelaufnahmen gebildetes resultierendes Bild mit gemittelten Intensitätswerten und/oder deren gemittelten Ortsdaten oder mit gemittelten Daten der charakteristischen Merkmale ist für die Auswertung mit dem erfindungsgemäßen Verfahren besonders geeignet.

Besonders bevorzugt ist eine Weiterbildung des Verfahrens, bei der die im Schritt a) erfasste Bildinformation des Schmelzbads in einem nachfolgenden Schritt a') in einem Bildinformationsspeicher gespeichert wird und bei der dann die Schritte a) und a') mehrmals wiederholt werden. Nach einer vorgegebenen Anzahl von Wiederholungen wird in einem Schritt a") eine Mittelung der Bildinformation durchgeführt und die nachfolgenden Verfahrensschritte werden mit dieser gemittelten Bildinformation durchgeführt.

Die im Schritt a) erfasste Bildinformation besteht beispielsweise aus Intensitätswerten (zum Beispiel Helligkeitswerten), die einem Bildpunkt (Pixel) des gerasterten aufgenommenen Bildes zugeordnet sind; es entsteht dabei somit eine Intensitätswerte-Matrix. Bei jeder der Wiederholungen werden die neu ermittelten Intensitätswerte zu dem jeweiligen vorher ermittelten Intensitätswert beziehungsweise der jeweiligen Intensitätswertesumme hinzuaddiert und nach Durchlauf aller Wiederholungen wird für jeden Bildpunkt ein mittlerer Intensitätswert berechnet. Daraus entsteht dann ein resultierendes Bild mit den gemittelten Intensitätswerten als Bildinformation, die den folgenden Verfahrensschritten zugrunde gelegt wird. Auf diese Weise wird das Wabern des Schmelzflecks optisch "geglättet".

Vorzugsweise werden die Schritte a) bis g) in Intervallen wiederholt. So wird eine quasi permanente Qualitätskontrolle gewährleistet.

Auch von Vorteil ist es, wenn die Schritte a) bis f) in Intervallen wiederholt werden und wenn im Schritt g) zunächst die über einen Zeitraum von mehreren Intervallen ermittelten Daten der charakteristischen Merkmale des zumindest einen symmetrischen Flächenkörpers gemittelt werden.

Bei einer bevorzugten Alternative werden die Schritte a) bis c) in Intervallen wiederholt, wobei die Ortsdaten des zumindest einen Bereichs gleicher Intensität gemittelt werden und wobei die Schritte d) bis g) auf der Grundlage des zumindest einen gemittelten Bereichs gleicher Intensität durchgeführt werden.

Gemäß einer bevorzugten Ausgestaltung des Verfahrens der Erfindung, die mit anderen Ausgestaltungen der Erfindung kombinierbar ist, wird im Schritt a) zumindest ein Spektralbereich des sichtbaren Lichts und/oder des ultravioletten Lichts und/oder des infraroten Lichts erfasst.

Dabei ist es von Vorteil, wenn die Schritte a) bis f) für mehrere Spektralbereiche durchgeführt werden und wenn der Schritt g) auf der Basis der in den mehreren Spektralbereichen ermittelten Daten der charakteristischen Merkmale des zumindest einen symmetrischen Flächenkörpers durchgeführt wird. Flüssiges Metall strahlt entsprechend der Materialzusammensetzung in unterschiedlichen Wellenlängen und damit in unterschiedlichen Farben. Die Durchführung der Schritte a) bis f) für mehrere Spektralbereiche, wobei vorzugsweise für jeden der Spektralbereiche ein Vergleich der ermittelten charakteristischen Merkmale mit zugeordneten Sollwerten erfolgt, erweitert die Möglichkeiten der Auswertung auf materialspezifische Parameter und sich daraus ergebende Erkenntnisse. Auf diese Weise kann als weitere Prozessgröße die Materialzusammensetzung in die Qualitätskontrolle mit einbezogen werden.

Besonders von Vorteil ist eine bevorzugte Ausgestaltung des Verfahrens der Erfindung, die mit anderen Ausgestaltungen der Erfindung kombinierbar ist, gemäß der zwischen dem Laserstrahl und dem Werkstück eine Relativbewegung erfolgt und wobei die geometrische Form des zumindest einen symmetrischen Flächenkörpers eine Ellipse ist. Diese Variante eignet sich besonders für das High-Speed-Laser-Cladding, also für das Hochgeschwindigkeits-Laserauftragsschweißen, Die hohe Relativbewegung zwischen Laserkopf und Werkstück führt dazu, dass ein ovales Schmelzbad entsteht, das in Bewegungsrichtung langgezogen ist, und dass die Ortsdaten des zumindest einen Bereichs gleicher Intensität, insbesondere bei einer Beobachtung über mehrere Intervalle, eine elliptische Form annehmen, deren längerer Halbmesser in Bewegungsrichtung verläuft.

Die erfindungsgemäße Vorrichtung zur optischen Qualitätskontrolle beim Prozess des Laserauftragsschweißens ist versehen mit einer Bilderfassungseinrichtung, einer Bildauswerteeinheit, einer Datenspeichereinrichtung und einer Prozesssteuereinrichtung und sie ist ausgestaltet zur Durchführung eines Verfahrens gemäß der Erfindung, wobei die Bilderfassungseinrichtung ausgebildet ist, um von einem in einem Bearbeitungsfleck ausgebildeten Schmelzbad als Licht emittierte elektromagnetische Strahlung zu erfassen. Sie zeichnet sich dadurch aus, dass die Bildauswerteeinheit ausgebildet ist, um auf der Grundlage der erfassten Bildinformation die Ortsdaten von zumindest einem Bereich gleicher Intensität und/oder von zumindest einem Bereich innerhalb eines bestimmten Intensitätsintervalls in der erfassten Bildinformation zur Bildung einer Kontur des Bereichs zu bestimmen, um dem zumindest einen Bereich gleicher Intensität zumindest einen symmetrischen, elliptischen Flächenkörper durch Approximation einer Ellipse an die Kontur des Bereichs zuzuordnen, um charakteristische Merkmale der geometrischen Form des zumindest einen symmetrischen, elliptischen Flächenkörpers zu ermitteln und um die charakteristischen Merkmale des zumindest einen symmetrischen, elliptischen Flächenkörpers als Datensatz in einer Datenspeichereinrichtung zu speichern, und dass die Prozesssteuereinrichtung ausgebildet ist, um den zumindest einen die Qualität der Beschichtung beeinflussenden Parameter des Laserauftragsschweiß-Prozesses mittels der auf der Basis der Daten der charakteristischen Merkmale des zumindest einen symmetrischen, elliptischen Flächenkörpers zu erfassen, zu kontrollieren und/oder zu überwachen.

Weitere bevorzugte und vorteilhafte Ausgestaltungsmerkmale der erfindungsgemäßen Vorrichtung sind Gegenstand der Unteransprüche 9 und 10.

Dabei ist es von Vorteil, wenn die Bilderfassungseinrichtung von einer elektronischen Kamera gebildet ist.

Vorzugsweise ist im Strahlungsweg des Laserstrahls ein Auskoppelspiegel vorgesehen, der das entlang des Strahlungswegs des Laserstrahls, entgegen dessen Ausbreitungsrichtung vom Schmelzbad emittierte Licht aus dem Strahlungsweg des Laserstrahls auskoppelt und zur Bilderfassungseinrichtung leitet.

Der Strahlungsweg der Bilderfassungseinrichtung ist jedoch nicht darauf beschränkt; er kann auch unabhängig und getrennt vom Strahlungsweg des Laserstrahls verlaufen, beispielsweise bei einer seitlich angeordneten und schräg von oben direkt auf das Schmelzbad gerichteter Bilderfassungseinrichtung.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine teilweise geschnittene schematische Ansicht einer erfindungsgemäßen Vorrichtung und
- Fig. 2: ein von der Bilderfassungsvorrichtung erfasstes Bild eines Schmelzbads mit eingeblendeter Ellipse als zugeordneter symmetrischer Flächenkörper.

### DARSTELLUNG VON BEVORZUGTEN AUSFÜHRUNGSBEISPIELEN

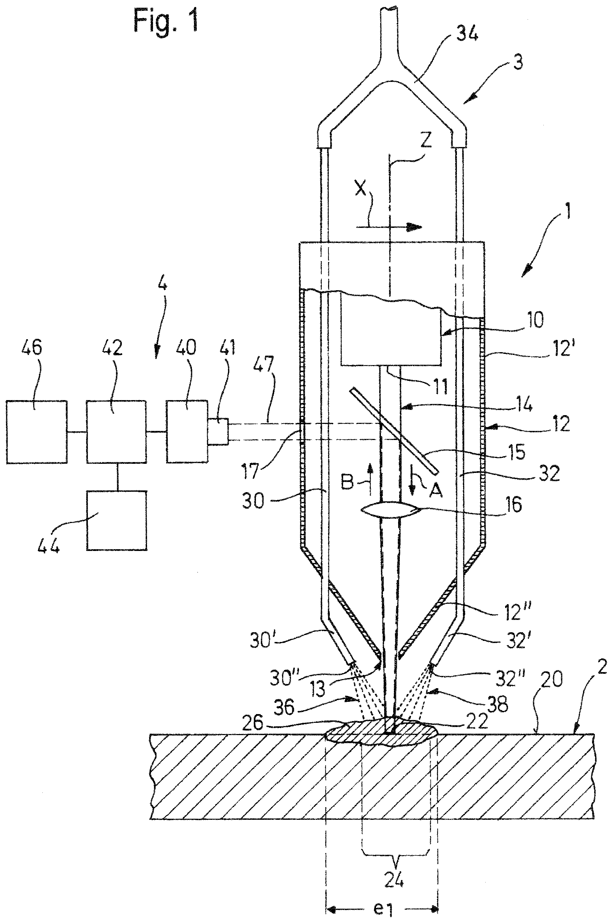

Fig. 1 zeigt in teilweise geschnittener schematischer Darstellung eine Vorrichtung zur optischen Qualitätskontrolle beim Laserauftragschweißen. Diese Vorrichtung umfasst einen Laserkopf 1 mit einer Laserlichtquelle 10, die beispielhaft im Inneren eines Gehäuses 12 des Laserkopfs 1 angeordnet ist. Das Gehäuse 12 umfasst einen oberen zylindrischen Abschnitt 12', in dessen oberem Bereich die Laserlichtquelle 10 vorgesehen ist, und einen unteren konischen Abschnitt 12", der sich vom zylindrischen Abschnitt 12' nach unten hin verjüngt und der an seinem unteren Ende im Bereich der Spitze des dadurch gebildeten Konus' eine zentrale Lichtdurchtrittsöffnung 13 aufweist. Alternativ kann die Laserlichtquelle auch außerhalb des Laserkopfs 1 angeordnet und über eine geeignete Lichtleiteinrichtung mit dem Laserkopf 1 zur Lichtübertragung verbunden sein.

Die Laserlichtquelle 10 ist an ihrem unteren, zur Lichtdurchtrittsöffnung 13 gerichteten Ende mit einem Lichtaustritt 11 versehen, aus dem bei eingeschalteter Laserlichtquelle ein Laserstrahl 14 koaxial zur Achse Z des zylindrischen Gehäuseabschnitts 12' nach unten (Strahlungsrichtung A) austritt. Der Laserstrahl 14 tritt dabei durch einen unter 45° zur Achse Z stehenden Auskoppelspiegel 15 und danach durch eine Fokussieroptik 16 hindurch, wo er fokussiert wird. Der fokussierte Laserstrahl 14 tritt aus der Durchtrittsöffnung 13 aus dem Gehäuse 12 aus und trifft in einem Auftreffpunkt 22 auf die Oberfläche 20 eines beispielsweise metallenen Werkstücks 2.

Der von der Fokussieroptik 16 auf den Auftreffpunkt 22 des Laserstrahls 14 auf der Oberfläche 20 des Werkstücks 2 fokussierte Laserstrahl erhitzt die Oberfläche in einem Oberflächenbereich, der als Bearbeitungsfleck 24 bezeichnet wird und der den Auftreffpunkt 22 des Laserstrahls 14 auf der Oberfläche 20 des Werkstücks 2 sowie die durch Wärmeleitung ebenfalls erhitzte Umgebung des Auftreffpunkts 22 umfasst. Im Bearbeitungsfleck 24, der im statischen Idealfall einen Kreis um den Auftreffpunkt 22 bildet, wird durch den fokussierten Laserstrahl 14 die Oberfläche 20 des Werkstücks 2 angeschmolzen und es entsteht dort ein Schmelzbad 26 aus dem Material des Werkstücks 2.

Da sich der Laserkopf 1 relativ zum Werkstück 2 entlang der Oberfläche 20 des Werkstücks 2 bewegt, was durch den Bewegungspfeil X symbolisiert ist, wobei der Abstand zwischen der Oberfläche 20 und der Lichtdurchtrittsöffnung 13 des Laserkopfs 1 im Wesentlichen konstant bleibt, bildet das Schmelzbad 26 eine länglich-ovale Form aus, weil das Schmelzbad 26 bei der Weiterbewegung des Laserstrahls 14 über die Oberfläche 20 des Werkstücks 2 nicht sofort erstarrt. In den Figuren ist die Längsabmessung e₁ dieser länglich-ovalen Form in Bewegungsrichtung X angegeben. Alternativ kann sich auch das Werkstück 2 relativ zum dann feststehenden Laserkopf 1 bewegen.

Der Laserkopf 1 ist weiterhin mit einer Pulverzuführeinrichtung 3 versehen, die im gezeigten Beispiel von zwei Zuführrohren 30, 32 sowie einer an die Zuführrohre 30, 32 angeschlossenen Zuführleitung 34 besteht. Die Zuführrohre 30, 32 verlaufen größtenteils parallel zur Zylinderachse Z durch den zylindrischen Abschnitt 12' des Gehäuses 12 hindurch von oben nach unten und treten im Bereich des konischen Abschnitts 12" des Gehäuses 12 aus. Unterhalb des konischen Abschnitts 12" des Gehäuses 12 weisen die beiden Zuführrohre 30, 32 jeweils einen schräg zur Zylinderachse Z hin gerichteten unteren Abschnitt 30', 32' auf, der jeweils am unteren Ende eine Düsenöffnung 30", 32" ausbildet. Auch wenn in Fig. 1 nur zwei Zuführrohre 30, 32 vorgesehen sind, so ist die Erfindung nicht darauf beschränkt; es können auch nur ein Zuführrohr oder mehr als zwei Zuführrohre vorgesehen sein.

Durch die Zuführleitung 34 und die Zuführohre 30, 32 wird ein mit einem pulverförmigen Beschichtungsmaterial angereichertes Gas transportiert, welches an den unteren Düsenöffnungen 30", 32" austritt, so dass die darin enthaltenen Pulverpartikel als Pulverstrahl 36, 38 des Beschichtungsmaterials auf das Schmelzbad 26 an der Oberfläche 20 des Werkstücks 2 geblasen werden. Die dort auftreffenden Pulverpartikel schmelzen aufgrund der dort vom Laserstrahl 14 erzeugten hohen Temperaturen und verschmelzen so im Schmelzbad 26 mit dem angeschmolzenen Material der Oberfläche 20 des Werkstücks 2. Durch die Relativbewegung zwischen dem Laserkopf 1 und dem Werkstück 2 wird auf diese Weise die gesamte zu beschichtende Oberfläche 20 des Werkstücks 2 mit dem pulverförmigen Material beschichtet.

Die erfindungsgemäße Vorrichtung 1 weist weiterhin eine Bilderfassungs- und Auswerteeinheit 4 auf, die eine Bilderfassungseinrichtung 40, beispielsweise eine elektronische Kamera, eine mit der Bilderfassungseinrichtung 40 zur Datenübertragung verbundene Bildauswerteeinheit 42 mit einer daran angeschlossenen und zur Datenübertragung verbundenen Datenspeichereinrichtung 44 und eine ebenfalls mit der Bildauswerteeinheit 42 zur Datenübertragung verbundene Prozesssteuereinrichtung 46 auf, die ausgebildet ist, um Prozessparameter der erfindungsgemäßen Vorrichtung zur optischen Qualitätskontrolle, insbesondere des Laserkopfs 1 und/oder der Pulverzuführeinrichtung 3, zu steuern und/oder zu regeln.

Die Bilderfassungseinrichtung 40 ist mit einer Kameraoptik 41 versehen, die Licht 47, vorzugsweise im sichtbaren Wellenlängenbereich, empfängt, welches vom Schmelzbad 26 emittiert wird. Dieses emittierte Licht 47 läuft im gezeigten Beispiel entlang des Strahlengangs des Laserstrahls 14 in einer Richtung B entgegengesetzt zur Ausbreitungsrichtung A des Laserstrahls 14 und tritt durch die Fokussieroptik 16 hindurch, wonach es auf den Auskoppelspiegel 15 trifft und dort aus dem Strahlengang des Laserstrahls 14 ausgekoppelt und zur Seite abgelenkt wird, wo es dann durch eine seitliche Lichtaustrittöffnung 17 aus dem Gehäuse 12 des Laserkopfs 1 austritt. Das ausgekoppelte Licht 47 wird dann auf die Kameraoptik 41 der Bilderfassungseinrichtung 40 geleitet. Die Bilderfassungseinrichtung 40 erfasst auf einem (nicht gezeigten) Bildsensor dadurch ein Abbild des Schmelzbads 26. Je nach der Positionierung und Ausrichtung der Bilderfassungseinrichtung 40 kann der zur Bilderfassungseinrichtung gerichtete Strahlengang auch getrennt vom Strahlengang des Laserstrahls 14, beispielsweise auf direktem Weg zwischen dem Schmelzbad 26 und der Bilderfassungseinrichtung 40, verlaufen.

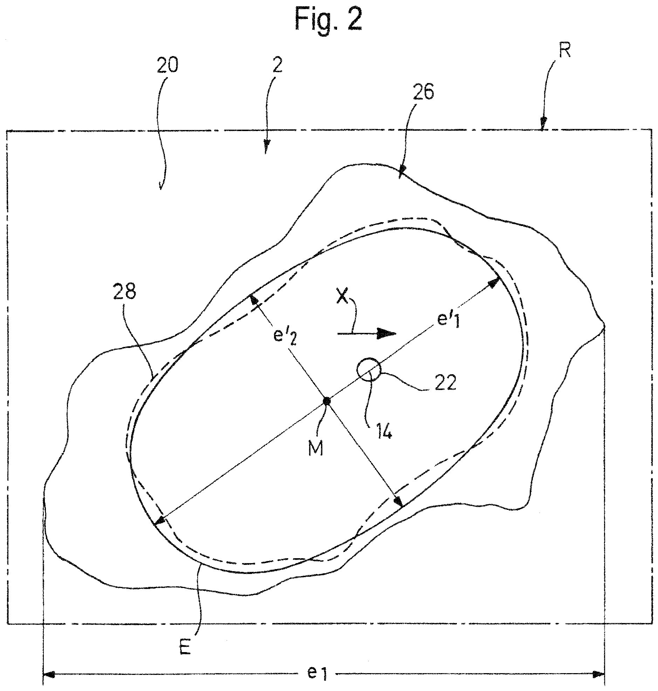

Dieses Kamerabild ist in Fig. 2 dargestellt. Der Blick von oben durch die Lichtdurchtrittsöffnung 13 im Gehäuse 12 auf die Oberfläche 20 des zu beschichtenden Werkstücks 2 ist im Bildrahmen R zu sehen. Darin ist das Schmelzbad 26 zu erkennen, dessen ungleichmäßige Außenkontur keine scharfe Grenze zwischen dem festen Material des Werkstücks 2 und dem aufgeschmolzenen Material darstellt, sondern dessen Grenze aufgrund der Temperaturverteilung sowie der Bewegung des Laserkopfs 1 wabert. In Fig. 2 ist der Auftreffpunkt 22 des Laserstrahls 14 auf die Oberfläche 20 des Werkstücks 2 schematisch dargestellt, der sich in Richtung des Pfeils X relativ zum Werkstück 2 bewegt. Die von der Bilderfassungseinrichtung 40 erfasste Bildinformation des aufgenommenen Schmelzbads 26 - das ist die Bildinformation aus dem in Fig. 2 dargestellten Bild innerhalb des Rahmens R - wird an die Bildauswerteeinheit 42 weitergeleitet. Dort werden Bereiche gleicher Intensität, beispielsweise Bereiche gleicher Bildhelligkeit, im gesamten sichtbaren Lichtspektrum oder in Teilspektren einiger Farben bestimmt und aus dieser Information auf rechnerische Weise wird daraus eine nachstehend auch als Isointensitätslinie 28 bezeichnete Kurve oder bandartige Fläche der Orte gleicher Intensität oder gleicher Intensitäten eines Intensitätsbereichs, beispielsweise gleicher Helligkeit, bestimmt.

Dieser Isointensitätslinie 28, die in Fig. 2 durch eine gestrichelte Linie schematisch dargestellt ist, wird eine Ellipse E als symmetrischer Flächenkörper zugeordnet, der in seiner Ausrichtung (lange Ellipsenachse e'₁ und kurze Ellipsenachse e'₂) und in seinem Flächeninhalt der gestrichelten Isointensitätslinie 28 am nächsten kommt. Die charakteristischen Merkmale dieser Ellipse E sind beispielsweise deren Hauptachse e'₁ und deren Nebenachse e'₂.

Diese aus dem Bild der Fig. 2 abgeleiteten charakteristischen Merkmale, zu denen nicht nur die Länge der Hauptachse e'₁ und der Nebenachse e'₂ der Ellipse E gehören, sondern auch deren Ausrichtung um den Mittelpunkt M der Ellipse E in der Ebene der Oberfläche 20 (Zeichenebene in Fig. 2) gehört, werden dann mit in der Datenspeichereinrichtung 44 gespeicherten vergleichbaren charakteristischen Merkmalen verglichen. Diese gespeicherten charakteristischen Merkmale wurden zu einem früheren Zeitpunkt in einem unter optimalen Laborbedingungen durchgeführten Versuch ermittelt und geben die idealen Prozessvoraussetzungen für das Laserauftragschweißen wieder. Aufgrund der Abweichungen der charakteristischen Merkmale der Ellipse E zu den in der Datenspeichereinrichtung 44 gespeicherten idealen charakteristischen Merkmalen lassen sich nun einzelne Parameter wie beispielsweise die Intensität des Laserstrahls, der Abstand der Lichtdurchtrittsöffnung 13 des Laserkopfs 1 zur Oberfläche 20 des Werkstücks 2 und/oder die Menge und Geschwindigkeit des jeweils aus den Düsenöffnungen 30", 32" austretenden Partikelstrahls 36, 38 nachstellen oder nachregeln.

Im gezeigten Beispiel werden somit im Verfahrensschritt d) prozessbeschreibende Ellipsen in die Bilder des laufenden Laserauftragsschweiß-Prozesses approximiert und im Verfahrensschritt g) werden die im Schritt e) gewonnenen Ellipsenparameter mit vorher definierten Referenz-Parametern, die einen optimalen Prozess beschreiben, verglichen. Durch diesen Vergleich können die nachfolgenden Prozessgrößen detektiert werden oder Rückschlüsse auf diese Prozessgrößen gewonnen werden:
- Prozessstabilität und Konstanz des Laserauftragsschweiß-Prozesses
- Änderung der eingebrachten Prozessleistung
- Wärmeeintrag in das Werkstück im Bereich des Auftreffpunktes 22
- Wärmeabfuhr aus dem Schmelzbad in den umgebenden Werkstückbereich
- Änderungen von Pulverart und Pulverfluss
- Änderungen der Prozesstemperatur.

Auf diese Weise lässt sich die Qualität der auf die Oberfläche 20 des Werkstücks 2 aufgebrachten Beschichtung mit einfachen Parametern kontrollieren und der Prozess des Laserauftragsschweißens steuern beziehungsweise regeln.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Laserkopf
- 2: Werkstück
- 3: Pulverzuführeinrichtung
- 4: Auswerteeinheit
- 10: Laserlichtquelle
- 11: Lichtaustritt
- 12: Gehäuse
- 12': oberer zylindrischer Gehäuseabschnitt
- 12": unterer konischer Gehäuseabschnitt
- 13: Lichtdurchtrittsöffnung
- 14: Laserstrahl (Bearbeitungs-Strahlengang)
- 15: Auskoppelspiegel
- 16: Fokussieroptik
- 17: Lichtaustrittsöffnung
- 20: Oberfläche
- 22: Auftreffpunkt
- 24: Bearbeitungsfleck
- 26: Schmelzbad
- 28: Isointensitätslinie
- 30: Zuführrohr
- 30': unterer Abschnitt
- 30": Düsenöffnung
- 32: Zuführrohr
- 32': unterer Abschnitt
- 32": Düsenöffnung
- 34: Zuführleitung
- 36: Pulverstrahl
- 38: Pulverstrahl
- 40: Bilderfassungseinrichtung
- 41: Kameraoptik
- 42: Bildauswerteeinheit
- 44: Datenspeichereinrichtung
- 46: Prozesssteuereinrichtung
- 47: Licht (Beobachtungs-Strahlengang)

- A: Ausbreitungsrichtung
- B: Richtung entgegengesetzt zur Ausbreitungsrichtung
- E: Ellipse
- e₁: Längsabmessung des Schmelzbads in Bewegungsrichtung
- e'₁: lange Ellipsenachse
- e'₂: kurze Ellipsenachse
- M: Mittelpunkt der Ellipse
- R: Bildrahmen
- X: Bewegungsrichtung
- Z: Zylinderachse

## Patentansprüche

1. Verfahren zur optischen Qualitätskontrolle beim Laserauftragsschweißen, wobei im Prozess des Laserauftragsschweißens die Oberfläche (20) eines zu beschichtenden Werkstücks (2) mittels eines auf einen Bearbeitungsfleck (24) der Oberfläche (20) gerichteten und durch eine Fokussieroptik (16) auf einen Auftreffpunkt (22) auf die Oberfläche (20) fokussierten hochenergetischen Laserstrahls (14) angeschmolzen wird, wobei zwischen dem Laserstrahl (14) und dem Werkstück (2) eine Relativbewegung erfolgt, wobei durch den Laserstrahl (14) im Bearbeitungsfleck (24) ein Schmelzbad (26) erzeugt wird, und wobei ein pulverförmiges Beschichtungsmaterial auf das Schmelzbad (26) im Bearbeitungsfleck (24) aufgebracht wird, mit den Schritten:
a) Erfassen der vom Schmelzbad (26) als Licht (47) emittierten elektromagnetischen Strahlung mittels einer Bilderfassungseinrichtung (40), wobei die Helligkeit des emittierten Lichts die Intensität der emittierten elektromagnetischen Strahlung repräsentiert;
b) Weiterleiten der erfassten Bildinformation des Schmelzbads (26) an eine Bildauswerteeinheit (42) und Kontrollieren und/oder Überwachen von zumindest einem die Qualität der Beschichtung beeinflussenden Parameter des Laserauftragsschweiß-Prozesses mittels einer Prozesssteuereinrichtung (46) auf der Basis der erfassten Bildinformation;
**zeichnet sich aus durch die weiteren Schritte:**
c) rechnerisches Bestimmen der Ortsdaten von zumindest einem Bereich (28) gleicher Intensität und/oder von zumindest einem Bereich innerhalb eines bestimmten Intensitätsintervalls in der erfassten Bildinformation zur Bildung einer Kontur des Bereichs;
d) Zuordnen von zumindest einem symmetrischen, elliptischen Flächenkörper (E) zu dem zumindest einen Bereich (28) gleicher Intensität und/oder dem zumindest einen Bereich (28) innerhalb eines bestimmten Intensitätsintervalls durch Approximation einer Ellipse an die Kontur des Bereichs;
e) Ermitteln von für die geometrische Form des zumindest einen symmetrischen, elliptischen Flächenkörpers (E) charakteristischen Merkmalen;
f) Speichern der charakteristischen Merkmale des zumindest einen symmetrischen, elliptischen Flächenkörpers als Datensatz in einer Datenspeichereinrichtung (44) und
g) Erfassen, Kontrollieren und/oder Überwachen des zumindest einen die Qualität der Beschichtung beeinflussenden Parameters des Laserauftragsschweiß-Prozesses mittels der Prozesssteuereinrichtung (46) auf der Basis der Daten der charakteristischen Merkmale des zumindest einen symmetrischen, elliptischen Flächenkörpers (E).

2. Verfahren nach Anspruch 1,
**dadurch gekennzeichnet,**
**dass** die Schritte a) bis g) in Intervallen wiederholt werden.

3. Verfahren nach Anspruch 1 oder 2,
**dadurch gekennzeichnet,**
**dass** die im Schritt a) erfasste Bildinformation des Schmelzbads (26) in einem nachfolgenden Schritt a') in einem Bildinformationsspeicher gespeichert wird, dass die Schritte a) und a') mehrmals wiederholt werden,
**dass** nach einer vorgegebenen Anzahl von Wiederholungen in einem Schritt a") eine Mittelung der Bildinformation durchgeführt wird und
**dass** die nachfolgenden Verfahrensschritte mit dieser gemittelten Bildinformation durchgeführt werden.

4. Verfahren nach Anspruch 1, 2 oder 3,
**dadurch gekennzeichnet,**
**dass** die Schritte a) bis f) in Intervallen wiederholt werden und dass im Schritt g) zunächst die über einen Zeitraum von mehreren Intervallen ermittelten Daten der charakteristischen Merkmale des zumindest einen symmetrischen Flächenkörpers gemittelt werden.

5. Verfahren nach Anspruch 1, 2 oder 3,
**dadurch gekennzeichnet,**
**dass** die Schritte a) bis c) in Intervallen wiederholt werden, wobei die Ortsdaten des zumindest einen Bereichs (28) gleicher Intensität gemittelt werden und dass die Schritte d) bis g) auf der Grundlage des zumindest einen gemittelten Bereichs gleicher Intensität durchgeführt werden.

6. Verfahren nach einem der vorhergehenden Ansprüche,
**dadurch gekennzeichnet,**
**dass** im Schritt a) zumindest ein Spektralbereich des sichtbaren Lichts und/oder des ultravioletten Lichts und/oder des infraroten Lichts erfasst wird.

7. Verfahren nach Anspruch 6,
**dadurch gekennzeichnet,**
**dass** die Schritte a) bis f) für mehrere Spektralbereiche durchgeführt werden und dass der Schritt g) auf der Basis der in den mehreren Spektralbereichen ermittelten Daten der charakteristischen Merkmale des zumindest einen symmetrischen Flächenkörpers (E) durchgeführt wird.

8. Vorrichtung zur optischen Qualitätskontrolle beim Laserauftragsschweißen, mit einer Bilderfassungseinrichtung (40), einer Bildauswerteeinheit (42), einer Datenspeichereinrichtung (44) und einer Prozesssteuereinrichtung (46), ausgestaltet zur Durchführung eines Verfahrens nach einem der vorhergehenden Ansprüche, wobei die Bilderfassungseinrichtung (40) ausgebildet ist, um von einem in einem Bearbeitungsfleck (24) ausgebildeten Schmelzbad (26) als Licht emittierte elektromagnetische Strahlung zu erfassen,
**dadurch gekennzeichnet,**
**dass** die Bildauswerteeinheit (42) ausgebildet ist,
- um auf der Grundlage der erfassten Bildinformation die Ortsdaten von zumindest einem Bereich (28) gleicher Intensität und/oder von zumindest einem Bereich innerhalb eines bestimmten Intensitätsintervalls in der erfassten Bildinformation zur Bildung einer Kontur des Bereichs (28) zu bestimmen,
- um dem zumindest einen Bereich (28) gleicher Intensität zumindest einen symmetrischen, elliptischen Flächenkörper (E) durch Approximation einer Ellipse an die Kontur des Bereichs (28) zuzuordnen,
- um charakteristische Merkmale der geometrischen Form des zumindest einen symmetrischen, elliptischen Flächenkörpers (E) zu ermitteln und
- um die charakteristischen Merkmale des zumindest einen symmetrischen, elliptischen Flächenkörpers (E) als Datensatz in einer Datenspeichereinrichtung (44) zu speichern, und
**dass** die Prozesssteuereinrichtung (46) ausgebildet ist, um den zumindest einen die Qualität der Beschichtung beeinflussenden Parameter des Laserauftragsschweiß-Prozesses mittels der auf der Basis der Daten der charakteristischen Merkmale des zumindest einen symmetrischen, elliptischen Flächenkörpers (E) zu erfassen, zu kontrollieren und/oder zu überwachen.

9. Vorrichtung nach Anspruch 8,
**dadurch gekennzeichnet,**
**dass** die Bilderfassungseinrichtung von einer elektronischen Kamera gebildet ist.

10. Vorrichtung nach Anspruch 8 oder 9,
**dadurch gekennzeichnet,**
**dass** im Strahlungsweg des Laserstrahls (14) ein Auskoppelspiegel (15) vorgesehen ist, der das entlang des Strahlungswegs des Laserstrahls (14), entgegen dessen Ausbreitungsrichtung (A) vom Bearbeitungsfleck (24) emittierte Licht (47) aus dem Strahlungsweg des Laserstrahls (14) auskoppelt und zur Bilderfassungseinrichtung (40) leitet.

## Claims

1. Method for optical quality control in laser deposition welding, wherein in the process of laser deposition welding the surface (20) of a workpiece (2) to be coated is melted by means of a high-energy laser beam (14) directed onto a processing spot (24) of the surface (20) and focussed by focussing optics (16) onto a point of impact (22) on the surface (20), wherein a relative movement takes place between the laser beam (14) and the workpiece (2), wherein a molten pool (26) is generated in the processing spot (24) by the laser beam (14), and wherein a powdery coating material is applied to the molten pool (26) in the processing spot (24), comprising the steps of
a) detecting the electromagnetic radiation emitted by the molten pool (26) as light (47) by means of an image detection device (40), wherein the brightness of the emitted light represents the intensity of the emitted electromagnetic radiation;
b) forwarding the captured image information of the molten pool (26) to an image evaluation unit (42) and controlling and/or monitoring at least one parameter of the laser deposition welding process which influences the quality of the coating by means of a process control device (46) on the basis of the captured image information;
**is characterised by the further steps**
c) computationally determining the location data of at least one region (28) of the same intensity and/or of at least one region within a specific intensity interval in the captured image information to form a contour of the region;
d) assigning at least one symmetrical, elliptical surface body (E) to the at least one region (28) of the same intensity and/or to the at least one region (28) within a specific intensity interval by approximating an ellipse to the contour of the region;
e) identifying characteristic features of the geometric shape of the at least one symmetrical, elliptical surface body (E);
f) storing the characteristic features of the at least one symmetrical, elliptical surface body as a data set in a data storage device (44); and
g) detecting, controlling and/or monitoring the at least one parameter of the laser deposition welding process influencing the quality of the coating by means of the process control device (46) on the basis of the data of the characteristic features of the at least one symmetrical, elliptical surface body (E).

2. Method according to claim 1,
**characterised**
**in that** steps a) to g) are repeated at intervals.

3. Method according to claim 1 or 2,
**characterised**
**in that** the image information of the molten pool (26) detected in step a) is stored in a subsequent step a') in an image information storage device, in that steps a) and a') are repeated for several times,
**in that** after a predetermined number of repetitions an averaging of the image information is carried out in a step a") and
**in that** the subsequent process steps are carried out with this averaged image information.

4. Method according to claim 1, 2 or 3,
**characterised**
**in that** steps a) to f) are repeated at intervals and in that in step g) the data of the characteristic features of the at least one symmetrical surface body identified over a period of several intervals are first averaged.

5. Method according to claim 1, 2 or 3,
**characterised**
**in that** steps a) to c) are repeated at intervals, the location data of the at least one region (28) of equal intensity being averaged, and in that steps d) to g) are carried out on the basis of the at least one averaged region of equal intensity.

6. Method according to one of the preceding claims,
**characterised**
**in that** in step a) at least one spectral range of visible light and/or of ultraviolet light and/or of infrared light is detected.

7. Method according to claim 6,
**characterised**
**in that** steps a) to f) are carried out for a plurality of spectral ranges and
**in that** step g) is carried out on the basis of the data of the characteristic features of the at least one symmetrical surface body (E) determined in the plurality of spectral ranges.

8. Device for optical quality control in laser deposition welding, having an image detection device (40), an image evaluation unit (42), a data storage device (44) and a process control device (46), designed for carrying out a method according to one of the preceding claims, wherein the image detection device (40) is designed to detect electromagnetic radiation emitted as light by a molten pool (26) formed in a processing spot (24),
**characterised**
**in that** the image evaluation unit (42) is adapted,
- to determine, on the basis of the captured image information, the location data of at least one region (28) of the same intensity and/or of at least one region within a specific intensity interval in the captured image information to form a contour of the region (28),
- to assign at least one symmetrical, elliptical surface body (E) to the at least one region (28) of the same intensity by approximating an ellipse to the contour of the region (28),
- to determine characteristic features of the geometric shape of the at least one symmetrical, elliptical surface body (E), and
- to store the characteristic features of the at least one symmetrical, elliptical surface body (E) as a data record in a data storage device (44), and
**in that** the process control device (46) is designed to detect, control and/or monitor the at least one parameter of the laser deposition welding process which influences the quality of the coating by means of the data based on the characteristic features of the at least one symmetrical, elliptical surface body (E).

9. Device according to claim 8,
**characterised**
**in that** the image acquisition device is comprised of an electronic camera.

10. Device according to claim 8 or 9,
**characterised**
**in that** a decoupling mirror (15) is provided in the radiation path of the laser beam (14), which decouples the light (47) emitted along the radiation path of the laser beam (14), counter to its direction of propagation (A), from the processing spot (24) out of the radiation path of the laser beam (14) and guides it to the image acquisition device (40).

## Revendications

1. Procédé de contrôle optique de la qualité lors du soudage par rechargement au laser,
dans lequel
au cours du processus de soudage par rechargement au laser, la surface (20) d'une pièce (2) à revêtir est fondue au moyen d'un faisceau laser (14) de haute énergie dirigé sur une tache de traitement (24) de la surface (20) et focalisé sur un point d'impact (22) sur la surface (20) par une optique de focalisation (16),
un mouvement relatif se produit entre le faisceau laser (14) et la pièce (2), un bain de fusion (26) est généré dans la tache de traitement (24) par le faisceau laser (14), et
un matériau de revêtement pulvérulent est appliqué sur le bain de fusion (26) dans la tache de traitement (24),
comprenant les étapes consistant à :
a) détecter le rayonnement électromagnétique émis sous forme de lumière (47) par le bain de fusion (26) au moyen d'un dispositif d'acquisition d'images (40), la luminosité de la lumière émise représentant l'intensité du rayonnement électromagnétique émis ;
b) transmettre l'information d'image saisie du bain de fusion (26) à une unité d'évaluation d'images (42) et contrôler et/ou surveiller, en se basant sur l'information d'image saisie, au moins un paramètre du processus de soudage par rechargement au laser, influençant la qualité du revêtement, au moyen d'un dispositif de commande de processus (46) ;
**caractérisé par** les autres étapes consistant à :
c) déterminer par calcul les données de localisation d'au moins une zone (28) de même intensité et/ou d'au moins une zone à l'intérieur d'un intervalle d'intensité déterminé dans l'information d'image saisie pour former un contour de la zone ;
d) associer au moins un corps plat elliptique symétrique (E) à ladite au moins une zone (28) de même intensité et/ou à ladite au moins une zone (28) à l'intérieur d'un intervalle d'intensité déterminé par approximation d'une ellipse au contour de la zone ;
e) déterminer des caractéristiques qui caractérisent la forme géométrique dudit au moins un corps plat elliptique symétrique (E) ;
f) stocker les caractéristiques qui caractérisent ledit au moins un corps plat elliptique symétrique en tant que jeu de données dans un dispositif de stockage de données (44), et
g) détecter, contrôler et/ou surveiller ledit au moins un paramètre du processus de soudage par rechargement au laser, influençant la qualité du revêtement, au moyen du dispositif de commande de processus (46) en se basant sur les données des caractéristiques qui caractérisent ledit au moins un corps plat elliptique symétrique (E).

2. Procédé selon la revendication 1,
**caractérisé en ce que**
les étapes a) à g) sont répétées à intervalles.

3. Procédé selon la revendication 1 ou 2,
**caractérisé en ce que**
l'information d'image du bain de fusion (26) saisie à l'étape a) est stockée dans une mémoire d'informations d'image dans une étape suivante a'),
**en ce que** les étapes a) et a') sont répétées plusieurs fois,
**en ce qu'**après un nombre prédéfini de répétitions, une moyenne de l'information d'image est formée dans une étape a"), et
**en ce que** les étapes suivantes du procédé sont exécutées avec cette information d'image moyennée.

4. Procédé selon la revendication 1, 2 ou 3,
**caractérisé en ce que**
les étapes a) à f) sont répétées à intervalles, et
**en ce que**, à l'étape g), tout d'abord une moyenne est formée des données, déterminées sur une période de plusieurs intervalles, des caractéristiques qui caractérisent ledit au moins un corps plat symétrique.

5. Procédé selon la revendication 1, 2 ou 3,
**caractérisé en ce que**
les étapes a) à c) sont répétées à intervalles, les données de localisation de ladite au moins une zone (28) de même intensité étant moyennées, et
**en ce que** les étapes d) à g) sont exécutées sur la base de ladite au moins une zone moyennée de même intensité.

6. Procédé selon l'une des revendications précédentes,
**caractérisé en ce que**
à l'étape a), au moins une région spectrale de la lumière visible et/ou de la lumière ultraviolette et/ou de la lumière infrarouge est détectée.

7. Procédé selon la revendication 6,
**caractérisé en ce que**
les étapes a) à f) sont exécutées pour plusieurs régions spectrales, et
**en ce que** l'étape g) est exécutée sur la base des données, déterminées dans lesdites plusieurs régions spectrales, des caractéristiques qui caractérisent ledit au moins un corps plat symétrique (E).

8. Dispositif de contrôle optique de la qualité lors du soudage par rechargement au laser, comprenant un dispositif d'acquisition d'images (40), une unité d'évaluation d'images (42), un dispositif de stockage de données (44) et un dispositif de commande de processus (46), conçu pour mettre en oeuvre un procédé selon l'une des revendications précédentes,
dans lequel le dispositif d'acquisition d'images (40) est conçu pour détecter un rayonnement électromagnétique émis sous forme de lumière par un bain de fusion (26) formé dans une tache de traitement (24),
**caractérisé en ce que**
l'unité d'évaluation d'images (42) est conçue pour
- déterminer, sur la base de l'information d'image saisie, les données de localisation d'au moins une zone (28) de même intensité et/ou d'au moins une zone à l'intérieur d'un intervalle d'intensité déterminé dans l'information d'image saisie pour former un contour de la zone (28) ;
- associer à ladite au moins une zone (28) de même intensité au moins un corps plat elliptique symétrique (E) par approximation d'une ellipse au contour de la zone (28),
- déterminer des caractéristiques qui caractérisent la forme géométrique dudit au moins un corps plat elliptique symétrique (E), et
- stocker les caractéristiques qui caractérisent ledit au moins un corps plat elliptique symétrique (E) en tant que jeu de données dans un dispositif de stockage de données (44), et
**en ce que** le dispositif de commande de processus (46) est conçu pour détecter, contrôler et/ou surveiller ledit au moins un paramètre du processus de soudage par rechargement au laser, influençant la qualité du revêtement, sur la base des données des caractéristiques qui caractérisent ledit au moins un corps plat elliptique symétrique (E).

9. Dispositif selon la revendication 8,
**caractérisé en ce que**
le dispositif d'acquisition d'images est constitué par une caméra électronique.

10. Dispositif selon la revendication 8 ou 9,
**caractérisé en ce que**
dans le chemin optique du faisceau laser (14) est prévu un miroir d'extraction (15) qui extrait la lumière (47), émise par la tache de traitement (24) le long du chemin optique du faisceau laser (14) en sens opposé à sa direction de propagation (A), hors du chemin optique du faisceau laser (14) et la dirige vers le dispositif d'acquisition d'images (40).
